# EUROPÄISCHE PATENTANMELDUNG

(11) **EP 4 289 892 A2**
(43) Veröffentlichungstag der Anmeldung: **13.12.2023**
(21) Anmeldenummer: 23205980.8
(22) Anmeldetag: 14.12.2016
(51) Int. Cl.: C08J 9/28

(54) **POLYMERZUSAMMENSETZUNG FÜR SELEKTIVE SINTERVERFAHREN**

(30) Priorität: 14.12.2015 DE 102015016131
(62) Teilanmeldung aus: 16820206.7
(71) Anmelder: Evonik Operations GmbH, 45128 Essen (DE)
(72) Erfinder: Diekmann, Wolfgang, 45731 Waltrop (DE); Grebe, Maik, 44805 Bochum (DE); Baumann, Franz-Erich, 48249 Dülmen (DE); Christoph, Wolfgang, 45768 Marl (DE); Monsheimer, Sylvia, 45721 Haltern am See (DE); Küting, Beatrice, 45772 Marl (DE)
(74) Vertreter: Evonik Patent Association

(57) **Zusammenfassung**

Es wird eine Polymerzusammensetzung für Selective Absorbing Sintering, SAS, oder Selective Inhibition Sintering, SIS, beschrieben. Das Polymer weist offene Mesoporen auf und die kumulative Porenvolumenverteilung der Mesoporen, gemessen nach DIN 66134, beträgt mindestens 0,01 cm³/g.

## Beschreibung

Die vorliegende Erfindung betrifft Polymerzusammensetzungen für ihren Einsatz in Selective Absorbing Sintering, SAS, oder Selective Inhibition Sintering, SIS, und ihre Verwendung. Weiterhin betrifft die Erfindung Formkörper sowie deren Herstellung.

Generative Fertigungsverfahren, häufig auch als Additive Manufacturing oder Rapid Prototyping bezeichnet, werden eingesetzt, um dreidimensionale Objekte schnell und kostengünstig fertigen zu können. Diese Fertigung erfolgt direkt auf der Basis der rechnerinternen Datenmodelle aus formlosem (Flüssigkeiten, Pulver u. ä.) oder formneutralem (band-, drahtförmig) Material mittels chemischer und/oder physikalischer Prozesse. Insbesondere Polymerpulver eignen sich als formloses Material.

Die Powder Bed Fusion-Technologie umfasst unter anderem das Direkte Metall-Lasersintern (DMLS), das Elektronenstrahlschmelzen (EBM), das Selective Heat Sintering (SHS), das selektive Laserschmelzen (SLM), das selektive Lasersintern (SLS), das Selective Absorbing Sintering (SAS) und das Selective Inhibition Sintering (SIS). Das SAS-Verfahren wird beispielsweise in US 2007/238056 beschrieben. US 2004/137228 A1 stellt das SIS-Verfahren dar.

Die Selektivität der Verfahren ohne Laser kann beispielsweise durch Absorber (Selective Absorbing Sintering, SAS) oder Inhibitoren (Selective Inhibition Sintering, SIS) erfolgen. Beim SAS-Verfahren wird die Absorption des mit dem Absorber beaufschlagten Materials erhöht; im Gegensatz dazu verzögert der Inhibitor das Aufschmelzen. Absorber und Inhibitor können in einem Verfahren gemeinsam zum Einsatz kommen. Geeignete Energiequellen in SAS-Verfahren sind solche die nur bedingt in das Material einkoppeln. Beim SIS-Verfahren ist die Energiequelle so zu wählen, dass die Erwärmung des Materials ausreichend schnell erfolgt.

Absorber und Inhibitoren können in einer Flüssigkeit gelöst oder dispergiert, beispielsweise mittels Inkjetverfahren in Form von Tinten, auf das Material aufgebracht werden. Die Flüssigkeit bzw. Absorber und Inhibitor sollte nur von dem bedruckten Material aufgenommen und nicht im Material horizontal oder vertikal abfließen.

Das Pulvermaterial des Standes der Technik wird durch den Auftrag der Flüssigkeit überwiegend an seiner Oberfläche mit Absorber bzw. Inhibitor beschichtet. Nachteilig beim SAS-Verfahren ist jedoch, dass die Partikel des Pulvermaterials ein inhomogenes Schmelzverhalten zeigen. Hieraus resultiert eine verminderte Schichtanbindung und schließlich ein Formkörper (Bauteil) mit verminderten Stabilitätseigenschaften, die beispielsweise in Form einer verminderten Reißdehnung gemessen werden kann. Nachteilig beim SIS-Verfahren ist bei erhöhter Inhibitorzugabe ein horizontales oder vertikales Abfließen des Inhibitors. Dadurch kommt es zu einem unscharfen Druckbild bzw. Bauteil.

Somit bestand die Aufgabe in der Bereitstellung einer Polymerzusammensetzung, welches in SASoder SIS-Verfahren eingesetzt werden kann, wobei Bauteile mit erhöhter Reißdehnung, höherer Formtreue, schärferen Kanten und besserer Prozessrobustheit erhalten werden sollten.

Demnach wurden Polymerzusammensetzungen für Selective Absorbing Sintering, SAS, oder Selective Inhibition Sintering, SIS, gefunden, die die Nachteile des Standes der Technik nicht aufweisen. Die Polymere weisen offene Mesoporen auf, wobei die kumulative Porenvolumenverteilung der Mesoporen, gemessen nach DIN 66134, mindestens 0,01 cm³/g beträgt. Vorzugsweise liegt die kumulative Porenvolumenverteilung bei mindestens 0,025 cm³/g und bevorzugt bei mindestens 0,035 cm³/g. Besonders bevorzugte kumulative Porenvolumenverteilungen sind jeweils mindestens 0,045 cm³/g, 0,05 cm³/g, 0,06 cm³/g und 0,07 cm³/g. Bevorzugt beträgt die kumulative Porenvolumenverteilung maximal 0,15 cm³/g und besonders bevorzugt 0,1 cm³/g. In einer bevorzugten Ausführungsform der Erfindung beträgt die kumulative Porenvolumenverteilung 0,05 cm³/g bis 0,15 cm³/g, besonders bevorzugt 0,06 cm³/g bis 0,1 cm³/g.

Durch die offenen Poren gelangt Absorber oder Inhibitor von der Oberfläche in das Partikelinnere und kann damit eine gleichmäßigere Verteilung dieser Stoffe ermöglichen. Hierdurch erfolgt ein gleichmäßigeres Aufschmelzen. Zudem wird ein horizontales oder vertikales Verlaufen der Flüssigkeit vermieden, da die Flüssigkeit von den Partikeln - im Gegensatz zu einer oberflächlichen Absorption - in höherer Menge aufgenommen wird. Die daraus herstellbaren Formkörper weisen im Vergleich zum Stand der Technik eine erhöhte Reißdehnung, höhere Formtreue, schärfere Kanten und bessere Prozessrobustheit auf.

Die Poren erwirken durch Kapillarkräfte eine Aufnahme von Absorber bzw. Inhibitor in Form der Flüssigkeit. Die kumulative Porenvolumenverteilung von mindestens 0,01 cm³/g führt dazu, dass Absorber bzw. Inhibitor möglichst rasch aufgenommen werden, schließlich herrschen während des SAS- bzw. SIS-Verfahrens üblicherweise Temperaturen von über 100 °C, die zu einer schnellen Verdampfung der Flüssigkeit führen. Hierbei sollen Absorber bzw. Inhibitor nicht zerlaufen oder ineinanderlaufen. Würde die kumulative Porenvolumenverteilung unterhalb von mindestens 0,01 cm³/g liegen, würde die Flüssigkeit verdampfen, bevor Absorber oder Inhibitor in die Partikel eingedrungen wären. Damit würden Absorber wie im Stand der Technik an der Oberfläche der Partikel verbleiben, und der Inhibitor würde eine geringe Inhibitorleistung erbringen.

Offene Poren der Partikel stehe mit dem umgebenden Medium in Verbindung, wohingegen geschlossene Poren in sich abgeschlossen sind und kein Medium eindringen lassen. Feinporen mit einem Durchmesser von 20 µm oder weniger werden von der IUPAC unterteilt in Makroporen

(> 50 nm), Mesoporen (2 - 50 nm) und Mikroporen (< 2 nm). Eine bevorzugte Polymerzusammensetzung weist mindestens 30 %, besonders bevorzugt mindestens 50 %, offene Mesoporen auf, bezogen auf die Summe an offenen Makro- und Mesoporen der Polymerzusammensetzung mit einem Porendurchmesser von 2 bis 300 nm, gemessen nach DIN 66134. Die Norm gilt für mesoporöse Feststoffe, allerdings wurde der Bereich oberhalb von 50 nm ebenfalls gemäß dieser Norm ermittelt.

Polymere mit Mikroporen sind weniger geeignet, da sie die Flüssigkeit nicht rasch genug und übliche Absorber gar nicht aufnehmen können. Makroporen können eine verringerte Kapillarwirkung zeigen und führen ebenfalls nicht dazu, dass die Flüssigkeit, die Absorber oder Inhibitor enthält, schnell genug in das Partikelinnere absorbiert wird.

Die Polymerzusammensetzung nimmt vorzugsweise 1000 pL bis 30000 pL Flüssigkeit pro g Polymerzusammensetzung auf, vorzugsweise 3000 pL bis 25000 pL und bevorzugt 5000 pL bis 20000 pL.

Als Flüssigkeit ist üblicherweise jede druckbare Flüssigkeit geeignet, welche Absorber beinhaltet bzw. als Inhibitor fungiert. Die Flüssigkeit, in die der Absorber oder der Inhibitor gelöst oder dispergiert ist, wird vorzugsweise aus den Lösemitteln Wasser, Monoalkoholen mit 1 bis 4 C-Atomen, Glykol oder Mischungen daraus ausgewählt.

In einer Ausführungsform der Erfindung weist die Polymerzusammensetzung entweder Absorber oder Inhibitoren auf. Hierzu ist die Zusammensetzung mit der zuvor beschriebenen Flüssigkeit beaufschlagt worden. Dies kann beispielsweise durch bekannte Druckverfahren erfolgen. Insofern stellt ein Verfahren zur Herstellung dieser Polymerzusammensetzung, wobei die erfindungsgemäße Polymerzusammensetzung mit Absorber oder Inhibitor beaufschlagt, vorzugsweise bedruckt, wird, einen weiteren Gegenstand der Erfindung dar.

Die Absorber oder Inhibitoren können Farbmittel sein. Farbmittel ist der Oberbegriff für alle farbgebenden Substanzen. Sie lassen sich nach DIN 55944:1990-04 nach ihrer Löslichkeit im umgebenden Medium in Farbstoffe und Pigmente einteilen. Farbstoffe sind organische, im umgebenden Medium lösliche schwarze oder bunte Substanzen. Pigmente hingegen sind pulver- oder plättchenförmige Farbmittel, die im Gegensatz zu Farbstoffen im umgebenden Medium unlöslich sind. Die Partikelgröße beträgt üblicherweise 30 bis 200 nm (Laserbeugung). Vorzugsweise ist das Farbmittel ein Pigment. Vorzugsweise wird das Pigment aus der Gruppe, bestehend aus organischen und anorganischen, farbgebenden, effektgebenden, farb- und effektgebenden, magnetisch abschirmenden, elektrisch leitfähigen, korrosionshemmenden, fluoreszierenden und phosphoreszierenden Pigmenten, ausgewählt. Vorzugsweise werden die farb- und/oder effektgebenden Pigmente verwendet.

Geeignete Pigmente sind ausgewählt aus Kreide, Ocker, Umbra, Grünerde, Terra di Siena gebrannt, Graphit, Titanweiß (Titandioxid), Bleiweiß, Zinkweiß, Lithopone, Antimonweiß, Ruß, Eisenoxidschwarz, Manganschwarz, Cobaltschwarz, Antimonschwarz, Bleichromat, Mennige, Zinkgelb, Zinkgrün, Cadmiumrot, Cobaltblau, Berliner Blau, Ultramarin, Manganviolett, Cadmiumgelb, Schweinfurter Grün, Molybdatorange, Molybdatrot, Chromorange, Chromrot, Eisenoxidrot, Chromoxidgrün, Strontiumgelb, Metalleffektpigmenten, Perlglanzpigmenten, Leuchtpigmenten mit Fluoreszenz- und/oder Phosphoreszenzpigmenten, Umbra, Gummigutt, Knochenkohle, Kasseler Braun, Indigo, Chlorophyll, Azofarbstoffen, Indigoide, Dioxazinpigmenten, Chinacridonpigmenten, Phthalocyaninpigmenten, Isoindolinonpigmenten, Perylenpigmenten, Perinonpigmenten, Metallkomplexpigmenten, Alkaliblaupigmenten und Diketopyrrolopyrrol.

Um eine bessere Verarbeitbarkeit der Polymerzusammensetzung zu erreichen, kann es vorteilhaft sein, dass Additive hinzugefügt werden. Derartige Additive können z. B. Rieselhilfen sein. Besonders bevorzugt weist das die Polymerzusammensetzung 0,05 bis 5 Gew.-%, vorzugsweise von 0,1 bis 1 Gew.-%, bezogen auf das Gesamtgewicht der Zusammensetzung, an Additiven auf. Rieselhilfen können z. B. pyrogene Kieselsäuren, Stearate oder andere literaturbekannte Rieselhilfen, wie z. B. Tricalciumphosphat, Calciumsilicate, Al₂O₃, MgO, MgCOs oder ZnO sein. Pyrogene Kieselsäure wird beispielsweise unter dem Markennamen Aerosil^{®} von Evonik Industries AG angeboten.

Neben oder an Stelle von solchen zum Teil anorganischen Rieselhilfen oder anderen Additiven kann die Polymerzusammensetzung auch anorganische Füllkörper aufweisen. Die Verwendung solcher Füllkörper hat den Vorteil, dass diese ihre Form durch die Behandlung beim Verbinden im Wesentlichen beibehalten und somit den Schrumpf des Formkörpers verringern. Zudem ist es durch die Verwendung von Füllkörpern z. B. möglich, die plastischen und physikalischen Eigenschaften der Objekte zu verändern. So können durch Verwendung von Pulvermaterial, welches Metallpulver aufweist, sowohl die Transparenz und Farbe als auch die magnetischen oder elektrischen Eigenschaften des Objektes eingestellt werden. Als Füllstoffe bzw. -körper kann das Pulvermaterial z. B. Glaspartikel, Keramikpartikel oder Metallpartikel aufweisen. Typische Füllstoffe sind z. B. Metallgriese, Aluminiumpulver, Stahl- oder Glaskugeln. Besonders bevorzugt werden Pulvermaterialien eingesetzt, die als Füllkörper Glaskugeln aufweisen. In einer bevorzugten Ausführungsvariante weist das erfindungsgemäße Pulvermaterial von 1 bis 70 Gew.-%, vorzugsweise von 5 bis 50 Gew.-% und ganz besonders bevorzugt von 10 bis 40 Gew.-% an Füllkörpern auf, bezogen auf das Gesamtgewicht der Polymerzusammensetzung.

Die Oberflächenenergie der Flüssigkeit sollte geringer sein als die Oberflächenenergie der Polymerzusammensetzung.

Die Flüssigkeit enthält das Farbmittel vorzugsweise in Anteilen von 0,1 bis 10 Gew.-%, besonders bevorzugt 2,5 bis 5 Gew.-%, bezogen auf das Gesamtgewicht der Flüssigkeit. Der pH-Wert der Flüssigkeit wird üblicherweise auf 6 bis 9 eingestellt.

Geeignete Flüssigkeiten können handelsübliche Tinten sein, die für den Tintendruck angeboten werden.

Geeignete Polymere der Polymerzusammensetzung können übliche und bekannte Polymere sind. Diese sind vorzugsweise ausgewählt aus Polyaryletherketonen wie Polyetheretherketone, Polyestern, Polyvinylchlorid, Polyacetalen, Polypropylen, Polyethylen, Polystyrol, Polycarbonaten, Polymethacrylmethylimiden, Polymethylmethacrylaten und Polyamiden, wobei Polyamide bevorzugt sind. Polyamide umfassen Homo-Polyamide und Co-Polyamide. Geeignete Polyamide oder Co-Polyamide sind ausgewählt aus Polyamid 6, 11, 12, 1013, 1012, 66, 46, 613, 106 und 12/1012. Ein besonders bevorzugtes Polyamid ist Polyamid 12. Die Polyamide können ungeregelt oder geregelt sein. Geeignete Regler sind Mono-, Di- oder Triamine oder Mono-, Di- oder Tricarbonsäuren.

Üblicherweise soll eine Polymerzusammensetzung, das in Sinterverfahren eingesetzt wird, eine möglichst geringe BET-Oberfläche aufweisen. Im Stand der Technik wird offenbart, dass der Wert beispielsweise weniger als 7 m²/g zeigen soll. Die erfindungsgemäße Polymerzusammensetzung hingegen sollte vorzugsweise eine BET-Oberfläche, gemessen nach DIN ISO 9277, von mindestens 7 m²/g, bevorzugt von 7,5 m²/g bis 30 m²/g, aufweisen. Zu einer besonders bevorzugten Ausführungsform zählen Polyamide mit einer BET-Oberfläche von mindestens 7 m²/g, vorzugsweise von 7,5 m²/g bis 30 m²/g. Oberhalb einer BET von 30m²/g ist die für den Prozess zur Verfügung stehende Materialmenge pro Volumen nicht ausreichend und dadurch eine hinreichende Prozessfähigkeit nicht mehr gegeben.

In einer bevorzugten Ausführungsform weist die Polymerzusammensetzung eine kululative Porenvolumenverteilung von mindestens 0,02 cm³/g, mehr bevorzugt mindestens 0,025 cm³/g, 0,035 cm³/g, mindestens 0,04 cm³/g, mindestens 0,05 cm³/g, mindestens 0,07 cm³/g oder mindestens 0,09 cm³/g auf. Weiterhin bevorzugt ist eine Porenvolumenverteilung von mindestens 0,02 cm³/g und eine BET-Oberfläche von mindestens 2,8 m²/g, vorzugswiese 0,04 cm³/g und 5,8 m²/g, bevorzugt 0,05 cm³/g und 10 m²/g und besonders bevorzugt von 0,07 cm³/g und 13 m²/g. Weitere bevorzugte Ausführungsformen umfassen eine kumulative Porenvolumenverteilung von mindestens 0,035 oder mindestens 0,05 cm³/g und eine BET von mindestens 7,5 m²/g, vorzugsweise eine kumulative Porenvolumenverteilung von 0,07cm³/g und eine BET von mindestens 10m²/g, besonders bevorzugt 0,09cm³/g und eine BET von mindestens 10m²/g.

Der gewichtsmittlere Korndurchmesser d₅₀ der Polymerzusammensetzung, gemessen mittels Laserbeugung, soll vorzugsweise nicht mehr als 100 µm, vorzugsweise 10 µm bis 80 µm, betragen (Malvern Mastersizer 3000; die Nassdispergierung erfolgte nassdispergiert in Wasser, Brechungsindex und Blaulichtwert festgelegt mit 1,52; Auswertung über Mie-Theorie). Polymere mit derartigen Durchmessern werden auch als Polymerpulver bezeichnet.

Es ist von Vorteil, wenn die Polymerzusammensetzung mit einem Partikeldurchmesser von weniger als 10,48 µm (Feinstpartikel) in geringer Menge vorhanden ist. Der Anteil an Feinstpartikel sollte weniger als 3 Gew.-%, bevorzugt weniger als 1,5 Gew.-% und besonders bevorzugt weniger als 0,75 Gew.-%, jeweils bezogen auf das Gesamtgewicht an Polymerzusammensetzung, betragen. Hierdurch wird die Staubentwicklung reduziert und eine Verbesserung der Verarbeitbarkeit (Prozessierbarkeit) ermöglicht. Die Abtrennung von Feinstpartikeln kann beispielsweise mittels Sichtung erfolgen.

Weiterhin sind Polymerzusammensetzungen bevorzugt, deren Schüttdichte, gemessen nach DIN 53466, zwischen 300 g/L und 600 g/L liegt.

Weiterhin stellen Polymere der Polymerzusammensetzung mit einer Oberflächenenergie von nicht mehr als 35 mN/m, vorzugsweise von 25 mN/m bis 32 mN/m, bevorzugte Polymere dar. Die Oberflächenenergie wird ermittelt mittels Kontaktwinkelmessung nach der Kapillarsteighöhenmethode durch Einsatz der Washburn-Gleichung und dem Auswerteverfahren nach Owens, Wendt, Rabel und Kaelble. Derartige Polymerzusammensetzung weisen eine möglichst gleichmäßige Fließfähigkeit auf, die in einer hohen Formstabilität der Formkörper resultiert.

Das Polymer und seine Zusammensetzung können durch einen Fällprozess erhalten werden. Diese kennzeichnen sich üblicherweise durch eine höhere kumulative Porenvolumenverteilung als Polymere, die beispielsweise durch Mahlverfahren gewonnen werden. Polymere, die nicht durch ein Fällprozess, sondern insbesondere durch Mahlverfahren erhalten werden, weisen eine kumulative Porenvolumenverteilung von in der Regel deutlich unter 0,01 cm³/g auf.

In dem Fällprozess wird das Polymer unter Einwirkung erhöhter Temperatur zumindest teilweise gelöst und anschließend durch Temperaturverringerung ausgefällt. Geeignete Lösemittel für Polyamide sind beispielsweise Alkohole, vorzugsweise C1-C4-Monoalkohole wie Ethanol. US5932687 nennt beispielsweise geeignete Prozessbedingungen. Das Verfahren umfasst die Schritte a) zumindest teilweises Lösen der Polymerzusammensetzung bei einer Temperatur von 10 K bis 60 K oberhalb der Lösetemperatur der jeweiligen Polymerzusammensetzung und anschließend b) Verringerung der Temperatur bis zur Fälltemperatur unter Erhalt einer Suspension. Die Lösetemperatur entspricht dem Klärpunkt der Polymerzusammensetzung in dem Lösemittel. Bei der Fälltemperatur entsteht eine Wärmeentwicklung durch das Ausfällen der Polymerzusammensetzung (visuell erkennbar durch eine Trübung).

Zur Einstellung der gewünschten porösen Eigenschaft der Polymerzusammensetzung ist es vorteilhaft, die erhaltene Suspension nach der Ausfällung 10 min bis 180 min bei einer Temperatur von 2-10 K, vorzugsweise 2-6 K, bevorzugt 2-4 K oberhalb der Fälltemperatur zu belassen. Besonders vorteilhaft ist es, die Polymerzusammensetzung in Schritt a) bei einer erhöhten Lösetemperatur von 40 K bis 60 K zu lösen und die Fällung (Schritt b) bei einer Temperatur, die um 3 K über der Fälltemperatur oder höher liegt, vorzugsweise maximal 10 K, durchzuführen.

Dem Fachmann ist bekannt, dass Sichtung und Siebung als Nachbehandlungsschritt zum Erreichen der gewünschten Partikelverteilung als Klassierungsmethoden üblich und teilweise notwendig sind.

Ein weiterer Gegenstand der Erfindung ist die Verwendung der erfindungsgemäßen Polymerzusammensetzung in SAS- oder SIS-Verfahren zur Herstellung von Formkörpern. Hierbei ist es bevorzugt, die Polymerzusammensetzung mit der Flüssigkeit zu beaufschlagen.

Weiterhin bilden Formkörper, die zumindest teilweise aus erfindungsgemäßen Polymerzusammensetzungen erhalten werden, einen weiteren Gegenstand der Erfindung. Darüber hinaus sind Verfahren zur Herstellung von Formkörpern mittels SAS- oder SIS-Verfahren, wobei die erfindungsgemäße Polymerzusammensetzung eingesetzt wird, ebenfalls Gegenstand der Erfindung.

Die vorliegende Erfindung richtet sich mithin insbesondere auf folgende Aspekte:
1. Polymerzusammensetzung für Selective Absorbing Sintering, SAS, oder Selecti-ve Inhibition Sintering, SIS, dadurch gekennzeichnet, dass das Polymer offene Mesoporen aufweist und die kumulative Porenvolumenverteilung der Mesoporen, gemessen nach DIN 66134, mindestens 0,01 cm³/g beträgt.
2. Polymerzusammensetzung nach Aspekt 1, dadurch gekennzeichnet, dass die kumulative Porenvolumenverteilung mindestens 0,025 cm³/g, bevorzugt 0,035 cm³/g, beträgt.
3. Polymerzusammensetzung nach einem der vorherigen Aspekte, dadurch gekennzeichnet, dass mindestens 30 %,vorzugsweise mindestens 50 %, offene Mesoporen sind, jeweils bezogen auf die Summe an offenen Makro- und Mesoporen der Polymerzusammensetzung mit einem Porendurchmesser von 2 bis 300 nm, gemessen nach DIN 66134.
4. Polymerzusammensetzung nach einem der vorherigen Aspekte, dadurch gekennzeichnet, dass die Polymerzusammensetzung Flüssigkeit in einem Volu-men von 1000 pL/g bis 30000 pL/g aufnimmt.
5. Polymerzusammensetzung nach einem der vorherigen Aspekte, dadurch gekennzeichnet, dass die BET-Oberfläche der Polymerzusammensetzung, ge-messen nach DIN ISO 9277, mindestens 7 m2/g, vorzugsweise 10 m2/g bis 30 m2/g, aufweist.
6. Polymerzusammensetzung nach einem der vorherigen Aspekte, dadurch gekennzeichnet, dass der gewichtsmittlere Korndurchmesser d50 der Polymerzu-sammensetzung, gemessen mittels Laserbeugung, nicht mehr als 100 µm, vor-zugsweise 10 µm bis 80 µm, beträgt.
7. Polymerzusammensetzung nach einem der vorherigen Aspekte, dadurch gekennzeichnet, dass die Oberflächenenergie der Polymere, ermittelt mittels Kontaktwinkelmessung nach der Kapillarsteighöhenmethode durch Einsatz der Washburn-Gleichung und dem Auswerteverfahren nach Owens, Wendt, Rabel und Kaelble, nicht mehr als 35 mN/m, vorzugsweise 25 mN/m bis 32 mN/m, be-trägt.
8. Polymerzusammensetzung nach einem der vorherigen Aspekte, dadurch gekennzeichnet, dass es durch einen Fällprozess erhalten wird.
9. Polymerzusammensetzung nach einem der vorherigen Aspekte, dadurch gekennzeichnet, dass die Polymerzusammensetzung entweder Absorber oder Inhibitoren enthält.
10. Polymerzusammensetzung nach Aspekt 9, dadurch gekennzeichnet, dass Absorber bzw. Inhibitor jeweils in Form einer Flüssigkeit vorliegt.
11. Polymerzusammensetzung nach Aspekt 9 oder 10, dadurch gekennzeichnet, dass Absorber bzw. Inhibitor eine geringere Oberflächenenergie als die Polymerzusammensetzung hat.
12. Polymerzusammensetzung nach einem der vorherigen Aspekte, dadurch gekennzeichnet, dass die Polymere der Polymerzusammensetzung ausgewählt wird aus Polyaryletherketonen wie Polyetheretherketone, Polyestern, Polyvinylchlorid, Polyace-talen, Polypropylen, Polyethylen, Polystyrol, Polycarbonaten, Polymethacrylmethylimi-den, Polymethylmethacrylaten und Polyamiden, bevorzugt Polyamiden.
13. Polymerzusammensetzung nach einem der vorherigen Aspekte, dadurch gekennzeichnet, dass die Polymerzusammensetzung durch einen Fällprozess erhalten wird.
14. Verfahren zur Herstellung einer Polymerzusammensetzung nach einem der vorherigen Aspekte, umfassend die Schritte
   a) zumindest teilweises Lösen der Polymerzusammensetzung bei einer Tempera-tur von 10 K bis 60 K oberhalb der Lösetemperatur des jeweiligen Polymers und anschließend
   b) Verringerung der Temperatur bis zur Fälltemperatur unter Erhalt einer Suspen-sion.
15. Verfahren nach Aspekte 14, dadurch gekennzeichnet, dass die erhaltene Sus-pension nach der Ausfällung 10 min bis 180 min bei einer Temperatur von 2-10 K oberhalb der Fälltemperatur belassen wird.
16. Verfahren nach Aspekt 14 oder 15, dadurch gekennzeichnet, dass Schritt Schritt a) bei einer Lösetemperatur von 40 K bis 60 K erfolgt und die Fällung (Schritt b) bei einer Temperatur, die um 3 K über der Fälltemperatur oder höher liegt, durchzuführen.
17. Verwendung einer Polymerzusammensetzung nach einem der Aspekte 1 bis 13 in SASoder SIS-Verfahren zur Herstellung von Formkörpern.
18. Formkörper, die zumindest teilweise aus der Polymerzusammensetzung nach einem der Aspekte 1 bis 13 erhalten werden.
19. Verfahren zur Herstellung von Formkörpern mittels SAS- oder SIS-Verfahren, dadurch gekennzeichnet, dass eine Polymerzusammensetzung nach einem der Aspekte 1 bis 13 eingesetzt wird.

### Beispiele

### Beispiel 1: Umfällung von Polyamid 12 (PA 12)

400 kg ungeregeltes, durch hydrolytische Polymerisation hergestelltes PA 12 mit einer relativen Lösungsviskosität von 1.57 und einem Endgruppengehalt von 118 mmol/kg COOH bzw. 9 mmol/kg NH2 wurden mit 1500 I Ethanol, vergällt mit 2-Butanon und 1 % Wassergehalt, innerhalb von 2,5 Stunden in einem 3000 I-Rührkessel, bestückt mit einem Blattrührer, auf 156 °C gebracht und unter Rühren mit 75 Upm 1 Stunde bei dieser Temperatur belassen. Anschließend wurde die Manteltemperatur auf 124 °C reduziert und unter kontinuierlichem Abdestillieren des Ethanols mit einer Kühlrate von 25 K/h bei der derselben Rührerdrehzahl die Innentemperatur auf 125 °C gebracht. Von jetzt an wurde bei gleicher Kühlrate die Manteltempertur 2K - 3 K unter der Innentemperatur gehalten. Danach wurde weiter bei einer Kühlrate von 40 K/h abdestilliert und so die Innentemperatur auf 109 °C gebracht. Bei dieser Temperatur setzte die Fällung, erkennbar an der Wärmeentwicklung, ein. Die Destillationsgeschwindigkeit wurde soweit erhöht, dass die Innentemperatur nicht über 110 °C anstieg. Nach 5 Minuten fiel die Innentemperatur ab, was das Ende der Fällung anzeigte. Nun wurde die Manteltemperatur über einen Zeitraum von 80min wieder, um maximal 3°C, angehoben, bevor durch weiteres Abdestillieren und Kühlung über den Mantel die Temperatur der Suspension auf 45 °C gebracht und die Suspension danach in einen Schaufeltrockner überführt. Das Ethanol wurde bei 70 °C / 400 mbar abdestilliert und der Rückstand anschließend bei 20 mbar / 86 °C drei Stunden nachgetrocknet. Man erhielt ein gefälltes PA 12 mit einem mittleren Korndurchmesser von 91 µm. Die Schüttdichte betrug 435 g/l.

### Beispiel 2: Umfällung von Polyamid 11 (PA 11)

Das Polyamid wurde nach Beispiel 7 der US 8865053 mit einer abweichenden Innentemperatur von 106 °C hergestellt. Man erhielt ein gefälltes PA 11 mit einem mittleren Korndurchmesser von 50 µm. Die Schüttdichte betrug 450 g/l.

### Beispiel 3: Umfällung von Polyamid 12 (PA 12)

60 kg ungeregeltes, durch hydrolytische Polymerisation hergestelltes PA 12 mit einer relativen Lösungsviskosität von 1.57 und einem Endgruppengehalt von 118 mmol/kg COOH bzw. 8 mmol/kg NH2 wurden mit 250 I Ethanol, vergällt mit 2-Butanon und 1 % Wassergehalt, innerhalb von 2,5 Stunden in einem 800l-Rührkessel bei 110 Upm auf 145 °C gebracht und unter Rühren 1 Stunde bei dieser Temperatur belassen. Anschließend wurde die Manteltemperatur auf 124 °C reduziert und unter kontinuierlichem Abdestillieren des Ethanols mit einer Kühlrate von 25 K/h bei der derselben Rührerdrehzahl die Innentemperatur auf 125 °C gebracht. Von jetzt an wurde bei gleicher Kühlrate die Manteltemperatur 2K - 3 K unter der Innentemperatur gehalten. Die Innentemperatur wurde mit gleicher Kühlrate auf 117 °C gebracht und dann 60 Minuten konstant gehalten. Danach wurde weiter bei einer Kühlrate von 40 K/h abdestilliert und so die Innentemperatur auf 111 °C gebracht. Bei dieser Temperatur setzte die Fällung, erkennbar an der Wärmeentwicklung, ein. Die Destillationsgeschwindigkeit wurde soweit erhöht, dass die Innentemperatur nicht über 111.3 °C anstieg. Nach 25 Minuten fiel die Innentemperatur ab, was das Ende der Fällung anzeigte. Nun wurde die Manteltemperatur über einen Zeitraum von 35min wieder, um maximal 2°C, angehoben, bevor durch weiteres Abdestillieren und Kühlung über den Mantel die Temperatur der Suspension auf 45 °C gebracht und die Suspension danach in einen Schaufeltrockner überführt. Das Ethanol wurde bei 70 °C / 400 mbar abdestilliert und der Rückstand anschließend bei 20 mbar / 86 °C drei Stunden nachgetrocknet.

Man erhielt ein gefälltes PA 12 mit einem mittleren Korndurchmesser von 62 µm. Die Schüttdichte betrug 394g/l.

### Beispiel 4: Umfällung von Polyamid 12 (PA 12)

60 kg teilgeregeltes, durch hydrolytische Polymerisation in Ggw. von 0,4% Dodecandisäure hergestelltes PA 12 mit einer relativen Lösungsviskosität von 1.57 und einem Endgruppengehalt von 80 mmol/kg COOH bzw. 40 mmol/kg NH2 wurden mit 250 l Ethanol, vergällt mit 2-Butanon und 1 % Wassergehalt, innerhalb von 2,5 Stunden in einem 800l-Rührkessel auf 147 °C gebracht und unter Rühren 1 Stunde bei dieser Temperatur belassen. Anschließend wurde die Manteltemperatur auf 124 °C reduziert und unter kontinuierlichem Abdestillieren des Ethanols mit einer Kühlrate von 25 K/h bei der Rührerdrehzahl von 108 Upm die Innentemperatur auf 125 °C gebracht. Von jetzt an wurde bei gleicher Kühlrate die Manteltempertur 2K - 3 K unter der Innentemperatur gehalten. Danach wurde weiter bei einer Kühlrate von 40 K/h abdestilliert und so die Innentemperatur auf 109 °C gebracht. Bei dieser Temperatur setzte die Fällung, erkennbar an der Wärmeentwicklung, ein. Die Destillationsgeschwindigkeit wurde soweit erhöht, dass die Innentemperatur nicht über 110°C anstieg. Nach 5 Minuten wurde die Manteltemperatur über einen Zeitraum von 140min wieder, um maximal 4°C, angehoben, bevor durch weiteres Abdestillieren und Kühlung über den Mantel die Temperatur der Suspension auf 45 °C gebracht und die Suspension danach in einen Schaufeltrockner überführt. Das Ethanol wurde bei 70 °C / 400 mbar abdestilliert und der Rückstand anschließend bei 20 mbar/ 86 °C drei Stunden nachgetrocknet.

Man erhielt ein gefälltes PA 12 mit einem mittleren Korndurchmesser von 63 µm. Die Schüttdichte betrug 311g/l.

### Beispiel 5: Polyamid 12/1012 (PA 12/1012)

Das Polyamid wurde nach Beispiel 7 der US 8591797 hergestellt. Das erhaltene Granulat wurde mittels Stiftmühle kaltvermahlen. Man erhielt ein gemahlenes PA 12/1012.

### Beispiel 6: Umfällung von Polyamid 12 (PA 12) in Gegenwart von Glaskugeln

In Anlehnung an Beispiel 4 fällt man 60kg des folgenden teilgeregelten PA12, rel. Lösungsviskosität 1,78, COOH-Endgruppen 65 mmol/kg, NH2-Endgruppen 29 mmol/kg, unter folgenden abgeänderten Bedingungen in 250 I EtOH in Gegenwart von 40 Masse-% Glaskugeln (Swarcoforce C40-80) um:
Rührerdrehzahl 110 Upm Lösetemperatur: 149°C, 2 Stunden. Fälltemperatur: Keimbildungsphase vor der eigentlichen Fällung 115°C/30 min, Hauptfällphase anschließend bei 109°C. Die Trocknung erfolgt wie im Beispiel 4.

### Beispiel 7: Umfällung von teilgeregeltem PA12

In Anlehnung an Beispiel 4 fällt man 60kg des folgenden teilgeregelten PA12, rel. Lösungsviskosität 1,68, COOH-Endgruppen 75 mmol/kg, NH2-Endgruppen 49 mmol/kg, unter folgenden abgeänderten Bedingungen in 250 I EtOH um:
Lösetemperatur: 175°C
Fälltemperatur: 114°C
Die Trocknung erfolgt wie im Beispiel 4

### Beispiel 8: Umfällung von teilgeregeltem PA12

Beispiel 7 mit dem gleichen Einsatzpolyamid unter folgenden Bedingungen wiederholt:
Lösetemperatur: 175°C
Fälltemperatur: 115°C
Die Trocknung erfolgt wie im Beispiel 4

### Beispiel 9: Umfällen von PA613

Man fällt entsprechend Beispiel 4 40 kg eines PA 613-Granulatmusters (rel. Lösungsviskosität 1,81) um, wobei die Fällbedingungen folgendermaßen eingestellt werden:
Lösetemperatur: 175 °C
Fälltemperatur: 128 °C

### Beispiel 10: Co-Fällung von PA12 und PA1013

Man fällt entsprechend Beispiel 4 60 kg eines Granulatgemisches aus ungeregeltem PA12 (rel. Lösungsviskosität 1,62) und PA1013 (rel. Lösungsviskosität 1,64) im Masseverhältnis 85 : 15 um, wobei die Fällbedingungen folgendermaßen abgewandelt werden:
Lösetemperatur: 175 °C
Fälltemperatur: 112 °C

### Beispiel 11: Umfällen von PA106

Man fällt entsprechend Beispiel 4 60 kg eines PA 106-Granulatmusters (rel. Lösungsviskosität 1,84) um, wobei die Fällbedingungen folgendermaßen abgewandelt werden:
Lösetemperatur: 175 °C
Fälltemperatur: 142 °C

### Beispiel 12: Umfällen von PA106

Man fällt entsprechend Beispiel 4 60 kg eines PA 106-Granulatmusters (rel. Lösungsviskosität 1,62) um, wobei die Fällbedingungen folgendermaßen abgewandelt werden:
Lösetemperatur: 175 °C
Fälltemperatur: 142 °C

### Beispiel 13: Umfällung von PA66

Man fällt entsprechend Beispiel 4 40 kg eines PA 66-Granulatmusters (rel. Lösungsviskosität 1,61) um, wobei die Fällbedingungen folgendermaßen abgewandelt werden:
Lösetemperatur: 175 °C
Fälltemperatur: 157 °C

### Beispiel 14: Umfällen von PA12

Man wiederholt Beispiel 3 mit einer Lösetemperatur von 171°C und einer Fälltemperatur von 114°C.

Das Porenvolumen wurde gemäß der DIN 66134 in Doppelbestimmung ermittelt.

**Tabelle 1: kumuliertes Porenvolumen von Polyamidzusammensetzungen**

| Beispiel | Polyamid | Herstellart | d₅₀ | kumuliertes Porenvolumen in cm³/g |
|---|---|---|---|---|
| 1 | PA12 | Fällung | 91 µm | 0,015 |
| 2* | PA11 | Fällung | 50 µm | 0,002 |
| 3 | PA12 | Fällung | 62 µm | 0,037 |
| 4 | PA12 | Fällung | 63 µm | 0,072 |
| 5* | PA12/1012 | Mahlen | nicht bestimmt | 0,0006 |
| 6 | PA12 | Fällung | 56 | 0,052 |
| 7 | PA12 | Fällung | 63 | 0,12 |
| 8 | PA12 | Fällung | 63 | 0,091 |
| 9 | PA613 | Fällung | 59 | 0,088 |
| 10 | PA12/1013 | Fällung | 46 | 0,101 |
| 11 | PA106 | Fällung | 54 | 0,053 |
| 12 | PA106 | Fällung | 40 | 0,111 |
| 13 | PA66 | Fällung | 50-80 | 0,127 |
| 14 | PA12 | Fällung | 58 | 0,053 |

| | | | | |
|---|---|---|---|---|
| * nicht erfindungsgemäß | | | | |

## Patentansprüche

1. Polymerzusammensetzung für Selective Absorbing Sintering, SAS, oder Selective Inhibition Sintering, SIS, wobei die Polymere der Polymerzusammensetzung ausgewählt wird aus Polyaryletherketonen wie Polyetheretherketone, Polyestern, Polyvinylchlorid, Polyacetalen, Polypropylen, Polyethylen, Polystyrol, Polycarbonaten, Polymethacrylmethylimiden, Polymethylmethacrylaten und Polyamiden, bevorzugt Polyamiden, wobei das Polymer offene Mesoporen mit einem Durchmesser von 2 bis 50 nm aufweist und die kumulative Porenvolumenverteilung der Mesoporen, gemessen nach DIN 66134, mindestens 0,01 cm³/g beträgt, **dadurch gekennzeichnet, dass** die Oberflächenenergie der Polymere, ermittelt mittels Kontaktwinkelmessung nach der Kapillarsteighöhenmethode durch Einsatz der Washburn-Gleichung und dem Auswerteverfahren nach Owens, Wendt, Rabel und Kaelble, nicht mehr als 35 mN/m, vorzugsweise 25 mN/m bis 32 mN/m, beträgt.

2. Polymerzusammensetzung nach Anspruch 1, **dadurch gekennzeichnet, dass** die kumulative Porenvolumenverteilung mindestens 0,025 cm³/g, bevorzugt 0,035 cm³/g, beträgt.

3. Polymerzusammensetzung nach einem der vorherigen Ansprüche, **dadurch gekennzeichnet, dass** mindestens 30 %,vorzugsweise mindestens 50 %, offene Mesoporen sind, jeweils bezogen auf die Summe an offenen Makro- und Mesoporen der Polymerzusammensetzung mit einem Porendurchmesser von 2 bis 300 nm, gemessen nach DIN 66134.

4. Polymerzusammensetzung nach einem der vorherigen Ansprüche, **dadurch gekennzeichnet, dass** die BET-Oberfläche der Polymerzusammensetzung, gemessen nach DIN ISO 9277, mindestens 7 m²/g, vorzugsweise 10 m²/g bis 30 m²/g, aufweist.

5. Polymerzusammensetzung nach einem der vorherigen Ansprüche, **dadurch gekennzeichnet, dass** der gewichtsmittlere Korndurchmesser d₅₀ der Polymerzusammensetzung, gemessen mittels Laserbeugung, nicht mehr als 100 µm, vorzugsweise 10 µm bis 80 µm, beträgt.

6. Polymerzusammensetzung nach einem der vorherigen Ansprüche, **dadurch gekennzeichnet, dass** es durch einen Fällprozess erhalten wird.

7. Polymerzusammensetzung nach einem der vorherigen Ansprüche, **dadurch gekennzeichnet, dass** die Polymerzusammensetzung entweder Absorber oder Inhibitoren enthält.

8. Polymerzusammensetzung nach Anspruch 7, **dadurch gekennzeichnet, dass** Absorber bzw. Inhibitor in Form einer Flüssigkeit vorliegen.

9. Polymerzusammensetzung nach Anspruch 7 oder 8, **dadurch gekennzeichnet, dass** Absorber bzw. Inhibitor eine geringere Oberflächenenergie als die Polymerzusammensetzung hat.

10. Verfahren zur Herstellung einer gefällten Polymerzusammensetzung nach einem der vorherigen Ansprüche, umfassend die Schritte
a) zumindest teilweises Lösen deiner polymeren Zusammensetzung bei einer Temperatur von 10 K bis 60 K oberhalb der Lösetemperatur des jeweiligen Polymers und anschließend
b) Verringerung der Temperatur bis zur Fälltemperatur unter Erhalt einer Suspension.

11. Verfahren nach Anspruch 10, **dadurch gekennzeichnet, dass** die erhaltene Suspension nach der Ausfällung 10 min bis 180 min bei einer Temperatur von 2-10 K oberhalb der Fälltemperatur belassen wird.

12. Verfahren nach Anspruch 10 oder 11, **dadurch gekennzeichnet, dass** Schritt Schritt a) bei einer erhöhten Lösetemperatur von 40 K bis 60 K und die Fällung (Schritt b) bei einer Temperatur, die um 3 K über der Fälltemperatur oder höher liegt, erfolgt.

13. Verwendung einer Polymerzusammensetzung nach einem der Ansprüche 1 bis 9 in SASoder SIS-Verfahren zur Herstellung von Formkörpern.

14. Formkörper, die zumindest teilweise aus der Polymerzusammensetzung nach einem der Ansprüche 1 bis 9 erhalten werden.

15. Verfahren zur Herstellung von Formkörpern mittels SAS- oder SIS-Verfahren, **dadurch gekennzeichnet, dass** eine Polymerzusammensetzung nach einem der Ansprüche 1 bis 9 eingesetzt wird.
